# EUROPEAN PATENT APPLICATION

(11) **EP 4 668 501 A1**
(43) Date of publication of application: **24.12.2025**
(21) Application number: 25181375.4
(22) Date of filing: 06.06.2025
(51) Int. Cl.: H01R 13/436

(54) **CONNECTOR**

(30) Priority: 17.06.2024 JP 2024097457
(71) Applicant: Yazaki Corporation, Tokyo 108-0075 (JP)
(72) Inventor: Deno, Masahiro, Kakegawa-shi, Shizuoka, 437-1421 (JP); Hondo, Hidetaka, Sagamihara-shi, Kanagawa, 252-0231 (JP); Miyazaki, Yasutaka, Kakegawa-shi, Shizuoka, 437-1421 (JP)
(74) Representative: Grünecker Patent- und Rechtsanwälte PartG mbB

(57) **Abstract**

In a connector (1) including a housing (3), a terminal (5) being accommodated in the housing (3), and a holder (7) being assembled to the housing (3) and holding the terminal (5), a holding portion (41) that holds an arrangement position of the terminal (5) with respect to the housing (3) is provided between the terminal (5) and the holder (7), and the holding portion (41) includes a groove (29) that is provided in the terminal (5) and an engagement portion (39) that is provided to the holder (7) and is inserted into and engaged with the groove (29).

## Description

### TECHNICAL FIELD

The present invention relates to a connector.

### BACKGROUND

Hitherto, there has been known a connector including a housing, a terminal that is accommodated in the housing, and a holder that is assembled to the housing and holds the terminal (see JP 2018-10787 A). In the connector, the holder is provided with a holding portion that holds an arrangement position of the terminal with respect to the housing. The holding portion includes a flexible piece that is elastically deformable, a front locking portion that is formed at a distal end portion of the flexible piece and restricts a position of the terminal in an insertion direction, and a rear locking portion that is formed on a base end side of the flexible piece and prevents removal of the terminal. In such a connector, the holder can be assembled to the housing under a state in which the holding portion holds the terminal. Thus, assembly workability can be improved.

### SUMMARY OF THE INVENTION

Incidentally, the connector in JP 2018-10787 A, the holding portion includes the flexible piece that is elastically deformable, and the flexible piece is provided with the front locking portion and the rear locking portion that are engaged with the terminal. Thus, when the flexible piece is elastically deformed by an external force applied to the flexible piece, engagement of the front locking portion and the rear locking portion with respect to the terminal is cancelled, which may cause instability in holding the terminal.

The present invention has been made in view of such a problem in the related art. Further, an object of the present invention is to provide a connector that can hold a terminal stably.

A connector according to the present invention includes a housing, a terminal being accommodated in the housing, and a holder being assembled to the housing and holding the terminal, wherein a holding portion that holds an arrangement position of the terminal with respect to the housing is provided between the terminal and the holder, and the holding portion includes a groove that is provided in the terminal and an engagement portion that is provided to the holder and is inserted into and engaged with the groove.

According to the present invention, it is possible to provide a connector that can hold a terminal stably.

### BRIEF DESCRIPTION OF DRAWINGS

Fig. 1 is a perspective view of a connector according to the present embodiment.
Fig. 2 is a perspective view of a state in which a holder holding a terminal is assembled to a housing of the connector according to the present embodiment.
Fig. 3 is a cross-sectional view of the connector according to the present embodiment.
Fig. 4 is an enlarged view of main parts in Fig. 3.
Fig. 5 is a cross-sectional view of the connector according to the present embodiment.
Fig. 6 is a perspective view of a state in which the terminal is held by the holder of the connector according to the present embodiment.
Fig. 7 is a perspective view of the housing of the connector according to the present embodiment.
Fig. 8 is a perspective view of the terminal of the connector according to the present embodiment.
Fig. 9 is a perspective view of the holder of the connector according to the present embodiment.

### DETAILED DESCRIPTION OF THE INVENTION

With reference to the drawings, a connector according to the present embodiment is described below in detail. Note that the dimensional ratios in the drawings are exaggerated for explanatory purposes, and may differ from the actual ratios.

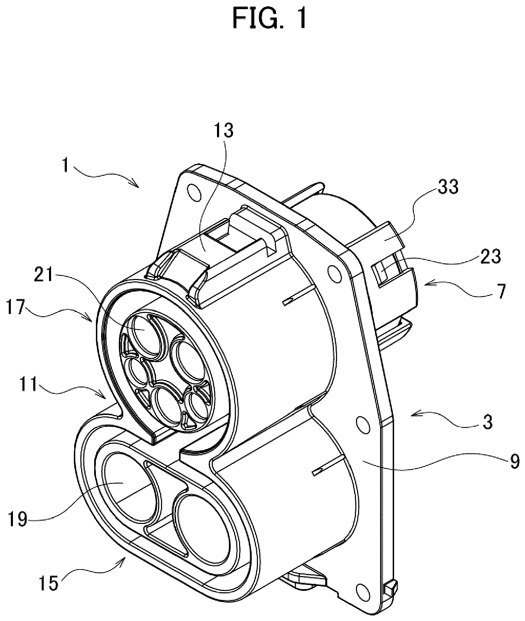

As illustrated in Fig. 1, a connector 1 according to the present embodiment is applied to a vehicle charging unit that charges a power source (omitted in illustration) installed in a vehicle (omitted in illustration) such as an electric automobile and a hybrid automobile. The connector 1 can be fitted to a charging connector (omitted in illustration) electrically connected to a charging device (omitted in illustration) arranged at a charging station or the like. When the charging connector is fitted to the connector 1, power is supplied from the charging device to the power source, and the power source is charged.

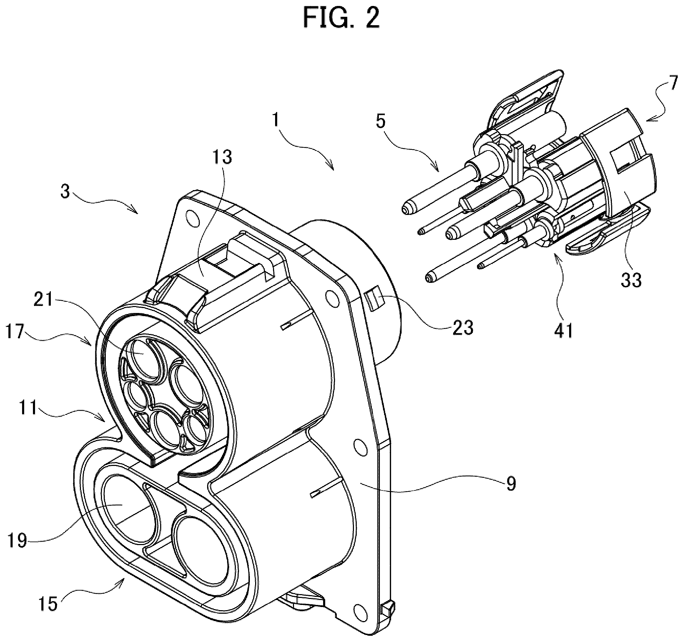

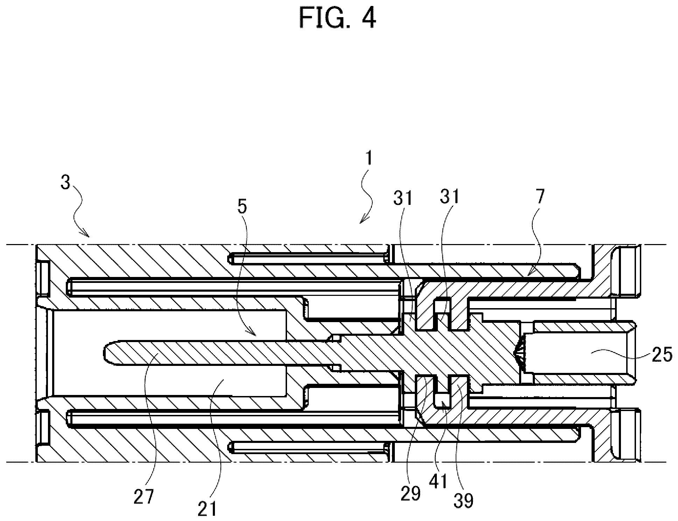

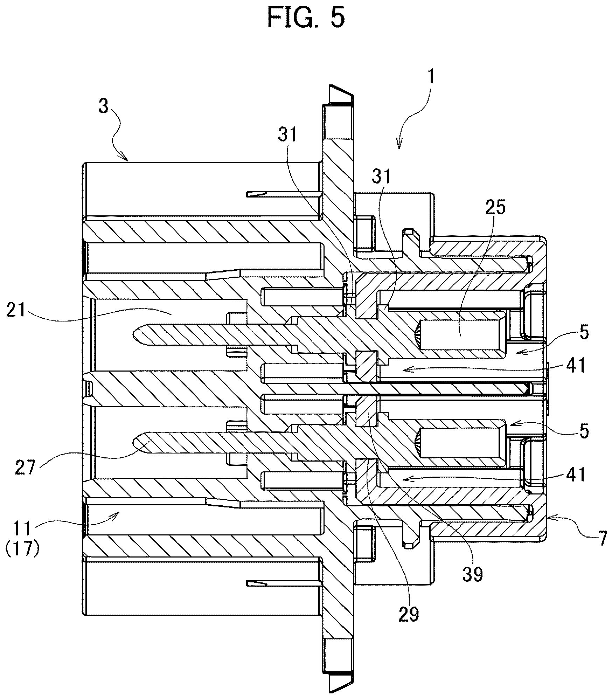

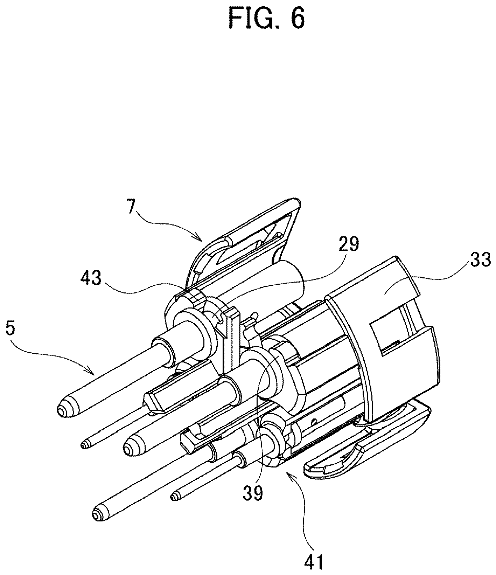

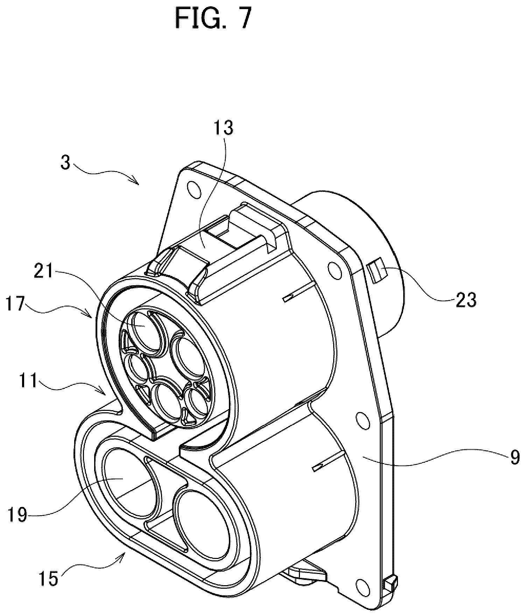

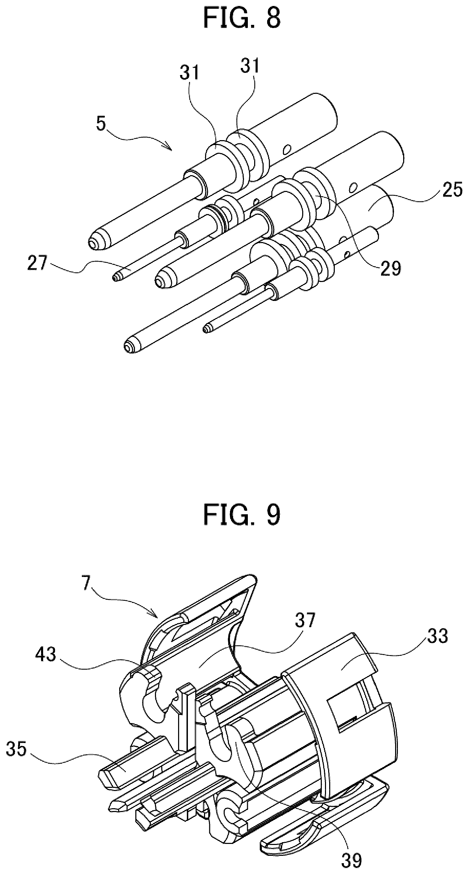

As illustrated in Fig. 1 to Fig. 9, the connector 1 includes a housing 3, a terminal 5, and a holder 7.

As illustrated in Fig. 1 to Fig. 5 and Fig. 7, the housing 3 is formed of an insulating material such as a synthetic resin. The housing 3 is formed to have a case-like shape that can accommodate a plurality of (specifically, seven in this case) terminals 5 therein and can be fitted to the charging connector. The housing 3 is provided with a fixing portion 9 that is formed to have a flange-like shape and is fixed to a vehicle side via a bolt or the like. On one surface side of the fixing portion 9, a fitting portion 11 that extends in a tubular shape from the fixing portion 9 toward the fitting direction with the charging connector is provided. On the outer surface of the fitting portion 11, a lock portion 13 that holds the fitting state with the charging connector is provided. The fitting portion 11 includes a rapid fitting portion 15 and a standard fitting portion 17.

The rapid fitting portion 15 is arranged at a lower part of the fitting portion 11. The rapid fitting portion 15 can be fitted to a charging connector, specifically, a rapid charging connector (omitted in illustration) that can charge the power source in a short amount of time. A plurality of (specifically, two in this case) rapid terminal accommodation chambers 19 are formed inside the rapid fitting portion 15. The rapid terminal accommodation chambers 19 extend in a tubular shape from the one surface side and the other surface side of the fixing portion 9 toward the fitting direction with the charging connector. Both sides of the rapid terminal accommodation chamber 19 in the length direction are opened. The opening of the rapid terminal accommodation chamber 19 on the one side is an insertion opening into which a rapid charging terminal (omitted in illustration) can be inserted. For example, the rapid charging terminal is electrically connected to a terminal end portion of an electric wire (omitted in illustration) electrically connected to the power source. The arrangement position of the rapid charging terminal, which is accommodated in the rapid terminal accommodation chamber 19 through the insertion opening, with respect to the rapid terminal accommodation chamber 19 is held by a holder (omitted in illustration) assembled to the insertion opening side. The opening of the rapid terminal accommodation chamber 19 on the other side is a connection opening into which a mating terminal (omitted in illustration) accommodated in the rapid charging connector is inserted. The rapid charging connector is fitted to the rapid fitting portion 15. With this, the mating terminal is inserted into the connection opening. Consequently, the rapid charging terminal and the mating terminal are electrically connected to each other. When the rapid charging terminal and the mating terminal are electrically connected to each other, the power source can be charged from charging equipment in a short amount of time.

The standard fitting portion 17 is arranged at an upper part of the fitting portion 11. The standard fitting portion 17 can be fitted to a charging connector, specifically, a standard charging connector (omitted in illustration) that can charge the power source in a standard amount of time. A plurality of (specifically, five in this case) standard terminal accommodation chambers 21 are formed inside the standard fitting portion 17. The standard terminal accommodation chamber 21 extend in a tubular shape from the one surface side and the other surface side of the fixing portion 9 toward the fitting direction with the charging connector. Both sides of the standard terminal accommodation chamber 21 in the length direction are opened. The opening of the standard terminal accommodation chamber 21 on the one side is an insertion opening into which the terminal 5 for standard charging can be inserted. On the outer surface of the standard terminal accommodation chamber 21 on the one side, a plurality of (specifically, four in this case) locking protrusions 23 are provided to protrude outward. The opening of the standard terminal accommodation chamber 21 on the other side is a connection opening into which a mating terminal (omitted in illustration) accommodated in the standard charging connector is inserted. The standard charging connector is fitted to the standard fitting portion 17. With this, the mating terminal is inserted into the connection opening. Consequently, the terminal 5 for standard charging and the mating terminal are electrically connected to each other. When the terminal 5 for standard charging and the mating terminal are electrically connected to each other, the power source can be charged from charging equipment in a standard amount of time.

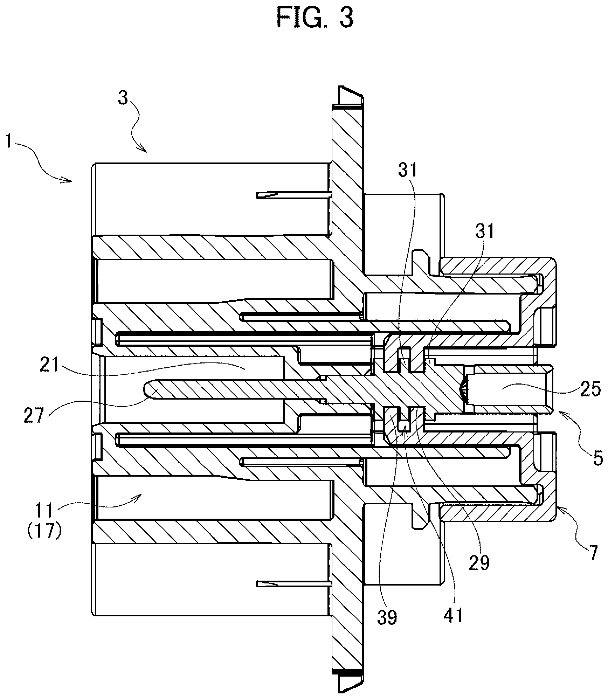

As illustrated in Fig. 3 to Fig. 6 and Fig. 8, the terminal 5 is formed of a conductive material such as a metal material. A plurality of (specifically, five in this case) terminals 5 such as a power terminal for power supply and a communication terminal for charging state detection are used. The terminal 5 is formed to have a columnar shape extending along the fitting direction of the connector 1 and the charging connector. One end of the terminal 5 functions as an electric wire connection portion 25. The electric wire connection portion 25 is formed to have a hollow shape, and is arranged on the insertion opening side of the standard terminal accommodation chamber 21 under a state in which the terminal 5 is accommodated in the standard terminal accommodation chamber 21. The electric wire connection portion 25 is fixed to the terminal end portion of the electric wire (omitted in illustration), which is electrically connected to the power source, by crimping or the like, and thus electrically connects the terminal 5 and the electric wire to each other. The other end of the terminal 5 functions as an electric connection portion 27. The electric connection portion 27 is formed to have a solid shape, and is arranged on the connection opening side of the standard terminal accommodation chamber 21 under a state in which the terminal 5 is accommodated in the standard terminal accommodation chamber 21. When the standard charging connector is fitted to the standard fitting portion 17, the electric connection portion 27 contacts with the mating terminal, and thus electrically connects the terminal 5 and the mating terminal to each other. A groove 29 is provided between the electric wire connection portion 25 and the electric connection portion 27. The groove 29 is formed continuously in the circumferential direction on the outer circumference of the terminal 5. The groove 29 is defined by the outer surface of the terminal 5 and an inner surface of a pair of flange portions 31 and 31. The pair of flange portions 31 and 31 are formed to have a continuous annular shape in the circumferential direction on the outer surface of the terminal 5, and are arranged at an interval in the length direction of the terminal 5. The outer surface of the terminal 5 and the inner surface of the pair of flange portions 31 and 31 define the groove 29. With this, even when the groove 29 is provided in the outer surface of the terminal 5, the cross-sectional area of the terminal 5 in the radial direction is not reduced, and electric connection reliability of the terminal 5 is not affected. Note that a plurality of (specifically, two in this case) grooves 29 are provided in at least one of the plurality of terminals 5. The plurality of grooves 29 are provided between adjacent flange portions 31 and 31 of a plurality of (specifically, three in this case) flange portions 31 formed along the length direction of the terminal 5. The arrangement position of the terminal 5 with respect to the housing 3 (the standard terminal accommodation chamber 21) is held by the holder 7 assembled to the housing 3.

As illustrated in Fig. 1 to Fig. 6 and Fig. 9, the holder 7 is formed of an insulating material such as a synthetic resin. The holder 7 is formed to have such a shape that at least a part thereof where the plurality of (specifically, five in this case) terminals 5 are arranged can be inserted into the insertion opening side of the standard terminal accommodation chamber 21. A plurality of (specifically, four in this case) locking pieces 33 are provided to the holder 7 in an elastically deformable manner. The locking pieces 33 are arranged on the outer surface of the standard terminal accommodation chamber 21, and can be engaged with the locking protrusions 23. When the locking protrusions 23 and the locking pieces 33 are engaged with each other, a state in which the holder 7 is assembled to the housing 3 can be maintained. A plurality of (specifically, four in this case) insertion portions 35 that extend along the assembly direction with the housing 3 are provided to the holder 7. When the holder 7 is assembled to the housing 3, the plurality of insertion portions 35 are inserted into a plurality of (specifically, four in this case) holes (omitted in illustration) provided in the housing 3. When the insertion portions 35 are inserted into the holes, the holder 7 can be positioned with respect to the housing 3, and the terminal 5 can be held stably with respect to the housing 3. The holder 7 is provided with a plurality of (specifically, five in this case) arrangement portions 37 at which the terminals 5 are arranged. The arrangement portion 37 is provided with an engagement portion 39 at a position corresponding to the groove 29 of the terminal 5.

The engagement portion 39 and the groove 29 of the terminal 5 form a holding portion 41 that causes the holder 7 to hold the terminal 5. The engagement portion 39 protrudes from the arrangement portion 37 toward the terminal 5, and is formed to have an annular shape with a cut-out in the circumferential direction so as to have an opening 43 into which the groove 29 can be inserted. When the terminal 5 is arranged at the arrangement portion 37, the groove 29 is inserted through the opening 43, and the engagement portion 39 is accommodated in the groove 29. In this manner, the engagement portion 39 is engaged with the groove 29. Under a state in which the groove 29 and the engagement portion 39 are engaged with each other, the terminal 5 can be restricted from moving in an insertion/removal direction with respect to the housing 3. Thus, when the holder 7 that holds the terminal 5 via the holding portion 41 is assembled to the housing 3, the arrangement position of the terminal 5 with respect to the housing 3 can be held. In addition, the plurality of terminals 5 are held by the holder 7 in advance, and the holder 7 is assembled to the housing 3. With this, the plurality of terminals 5 can be accommodated collectively in the housing 3, and assemblability can be improved. Note that, when the engagement portion 39 is formed as an elastic piece as in the related art, the engagement portion being an elastic piece is engaged with a part of the flange portion 31 of the terminal 5 in the circumferential direction. Thus, in order to secure an engagement margin and enhance a holding force, the flange portion 31 is required to be increased in size to have a larger diameter. In contrast, the engagement portion 39 is engaged with a large part of the flange portion 31 in the circumferential direction. Thus, an engagement margin is sufficiently secured, and a holding force is enhanced. Thus, even when the flange portion 31 of the terminal 5 is reduced in size to have a smaller diameter, a holding force equal to or larger than that in the related art can be obtained. When the flange portion 31 is reduced in size, the material of the terminal 5 can be reduced, and cost reduction for the terminal 5 can be achieved.

The width of the engagement portion 39 is set equal to or slightly larger than the width of the groove 29 (the interval between the pair of flange portions 31 and 31). Thus, the engagement portion 39 is engaged in a press-fitted state so that the outer surface of the engagement portion 39 is pressed by the inner surface of the groove 29 under a state in which the engagement portion 39 is inserted into the groove 29. The engagement portion 39 is engaged with the groove 29, and hence there is no need to provide an elastically deformable portion to the terminal 5 or the holder 7. Thus, there is no portion that undergoes elastic deformation due to an external force or the like, which enables the holding portion 41 to hold the terminal 5 stably. Further, the groove 29 and the engagement portion 39 are engaged with each other continuously in the circumferential direction of the terminal 5, except for the opening 43. Thus, the engagement area therebetween can be increased, and the terminal 5 can be held stably. In addition, the opening 43 of the engagement portion 39 is formed smaller than the diameter of the groove portion 29. When the groove 29 is inserted, the opening 43 is slightly pressed and expanded by the groove 29. When the groove 29 and the engagement portion 39 are engaged with each other, the opening 43 is restored. Thus, under a state in which the groove 29 and the engagement portion 39 are engaged with each other, the groove 29 does not come out of the opening 43, and the terminal 5 can be held stably. Note that the arrangement portion 37 corresponding to the terminal 5 provided with the plurality of grooves 29 are provided with the plurality of (specifically, two in this case) engagement portions 39. The plurality of grooves 29 and the plurality of engagement portions 39 form a plurality of (specifically, two in this case) holding portions 41. With this, the plurality of holding portions 41 are arranged in the insertion/removal direction of the terminal 5 with respect to the housing 3, and the arrangement position of the terminal 5 with respect to the housing 3 can be held stably.

The connector 1 described above includes the housing 3, the terminal 5 that is accommodated in the housing 3, and the holder 7 that is assembled to the housing 3 and holds the terminal 5. Further, the holding portion 41 that holds the arrangement position of the terminal 5 with respect to the housing 3 is provided between the terminal 5 and the holder 7. Further, the holding portion 41 includes the groove 29 that is provided in the terminal 5 and the engagement portion 39 that is provided to the holder 7 and is inserted into and engaged with the groove 29.

The engagement portion 39 is engaged with the groove 29, and hence there is no need to provide an elastically deformable portion to the terminal 5 or the holder 7. Thus, there is no portion that undergoes elastic deformation due to an external force or the like, which enables the holding portion 41 to hold the terminal 5 stably.

Therefore, in the connector 1 described above, the terminal 5 can be held stably.

Further, the groove 29 is formed continuously in the circumferential direction on the outer circumference of the terminal 5. Further, the engagement portion 39 is formed to have an annular shape with a cut-out in the circumferential direction so as to have the opening 43 into which the groove 29 can be inserted.

Thus, the area where the groove 29 and the engagement portion 39 are engaged with each other can be increased, and the terminal 5 can be held stably.

Further, the groove 29 is defined by the outer surface of the terminal 5 and the inner surface of the pair of flange portions 31 and 31 formed to have a continuous annular shape in the circumferential direction on the outer surface of the terminal 5.

Thus, even when the groove 29 is provided in the outer surface of the terminal 5, the cross-sectional area of the terminal 5 in the radial direction is not reduced, and electric connection reliability of the terminal 5 is not affected.

Further, the opening 43 is formed smaller than the diameter of the groove 29.

Thus, under a state in which the groove 29 and the engagement portion 39 are engaged with each other, the groove 29 is not removed from the opening 43, and the terminal 5 can be held stably.

Further, the plurality of holding portions 41 are provided in the insertion/removal direction of the terminal 5 with respect to the housing 3.

Thus, the arrangement position of the terminal 5 with respect to the housing 3 can be held stably.

While the present embodiment is described above, the present embodiment is not limited thereto, and various modifications can be made within the scope of the gist of the present embodiment.

For example, the five terminals are held by the holder, but the number of terminals is not limited thereto. Four or less or six or more terminals may be held by the holder.

Further, the plurality of holding portions are provided to one terminal of the plurality of terminals, but the arrangement is not limited thereto. The plurality of holding portions may be provided to two or more terminals, or all of the terminals. In addition, as the plurality of holding portions, three or more holding portions may be provided.

Further, the groove is formed continuously in the circumferential direction on the outer circumference of the terminal. However, the shape of the groove is not limited thereto. For example, a recess having a recess shape may be formed as the groove in a part of the outer surface of the terminal. In such a case, the engagement portion of the holder is only required to be a protrusion portion formed to have a protruding shape that can be fitted to the groove having a recess shape.

Although the present invention has been described above by reference to the embodiment, the present invention is not limited to those and the configuration of parts can be replaced with any configuration having a similar function, as long as they lie within the scope of the claims.

## Claims

1. A connector (1) comprising:
a housing (3);
a terminal (5) being accommodated in the housing (3); and
a holder (7) being assembled to the housing (3) and holding the terminal (5), wherein
a holding portion (41) that holds an arrangement position of the terminal (5) with respect to the housing (3) is provided between the terminal (5) and the holder (7), and
the holding portion (41) includes a groove (29) that is provided in the terminal (5) and an engagement portion (39) that is provided to the holder (7) and is inserted into and engaged with the groove (29).

2. The connector (1) according to claim 1, wherein
the groove (29) is formed continuously in a circumferential direction on an outer circumference of the terminal (5), and
the engagement portion (39) is formed to have an annular shape with a cut-out in a circumferential direction so as to have an opening (43) into which the groove (29) is insertable.

3. The connector (1) according to claim 2, wherein
the groove (29) is defined by an outer surface of the terminal (5) and an inner surface of a pair of flange portions (31) formed to have a continuous annular shape in the circumferential direction on the outer surface of the terminal (5).

4. The connector (1) according to claim 2 or 3, wherein
the opening (43) is formed smaller than a diameter of the groove (29).

5. The connector (1) according to any one of claims 1 to 3, wherein
a plurality of holding portions (41) are provided in an insertion/removal direction of the terminal (5) with respect to the housing (3).
